# FASCICULE DE BREVET EUROPEEN

(11) **EP 1 538 852 B1**
(45) Date de publication et mention de la délivrance du brevet: **08.10.2008**
(21) Numéro de dépôt: 04292863.0
(22) Date de dépôt: 03.12.2004
(51) Int. Cl.: H04Q 7/22, H04Q 7/24, H04Q 7/38

(54) **Procédé de préemption de ressources d'un réseau de communications mobiles, en vue de l'établissement d'un service en fonction d'un débit maximum de préemption associé**
Verfahren zur Funkbetriebsmittelzuweisung durch Bevorrechtigung in einem mobilen Kommunikationsnetzwerk zum Aufbau eines Dienstes gemäß dem maximalen Durchsatz der zugeordneten Bevorrechtigung
Method for preemption of resources in a mobile communications network, for the establishment of a service according to a maximum rate of the associated preemption

(30) Priorité: 04.12.2003 FR 0314277
(43) Date de publication de la demande: 08.06.2005
(73) Titulaire: Alcatel Lucent, 75008 Paris (FR)
(72) Inventeur: Blanc, Patrick, 92130 Issy les Moulineaux (FR); Billy, Nicolas, 91120 Palaiseau (FR)
(74) Mandataire: El Manouni, Josiane

(56) Documents cités:
- EP-A- 0 714 192
- EP-A- 1 359 780
- US-A- 6 072 787
- US-A1- 2003 203 736
- ETSI: "Universal Mobile Telecommunications System (UMTS); UTRAN Iu Interface Radio Access Network Application Part (RANAP) signalling (3GPP TS 25.413 version 3.13.0 Release 1999)" ETSI TS 125 413 V3.13.0, no. ETSI, juin 2003 (2003-06), pages 1-201, XP002289968 FRANCE
- ETSI: "Universal Mobile Telecommunications System (UMTS); Quality of Service (Qos) concept and architecture (3GPP TS 23.107 version 5.9.0 Release 5)" ETSI TS 123 107 V5.9.0, juin 2003 (2003-06), pages 1-41, XP002289969

## Description

L'invention concerne le domaine des réseaux de communications mobiles, et plus précisément l'établissement de services par préemption de ressources de tels réseaux.

Les réseaux de communications mobiles, et notamment ceux dits cellulaires, comme par exemple les réseaux UMTS ou GSM/GPRS, comportent un réseau de coeur (ou CN pour « Core Network ») raccordé à un réseau d'accès radio (ou RAN pour « Radio Access Network »). Le réseau d'accès radio (RAN) comprend des noeuds ou contrôleurs de réseau (radio) tels que des RNCs (pour « Radio Network Controllers ») ou des BSCs (pour « Base Station Controllers »), chargés de gérer l'allocation des ressources ou canaux logiques du réseau (tels que les canaux de liaison radio ou les codes de canalisation) en vue de l'établissement de services entre des terminaux mobiles et le réseau de coeur (CN). Un service (également connu sous l'acronyme anglais RAB (pour « Radio Access Bearer ») dans le cas d'un réseau UMTS) constitue par exemple une connexion pouvant être utilisée pour la transmission de données du réseau vers un terminal mobile (on parle alors de transmission descendante ou « downlink ») ou d'un terminal mobile vers le réseau (on parle alors de transmission montante ou « uplink »).

On entend ici par « terminal mobile » tout équipement de réseau, mobile ou itinérant, capable d'échanger des données avec un réseau de coeur, via son réseau d'accès radio. Par conséquent, il pourra notamment s'agir de téléphones mobiles, d'assistants numériques personnels (ou PDAs pour « Personal Digital Assistants ») ou d'ordinateurs portables équipés d'une interface radio de communication.

Comme le sait l'homme de l'art, dans les réseaux cellulaires de type CDMA (pour « Code Division Multiple Access ») plusieurs terminaux mobiles peuvent être simultanément actifs grâce à l'utilisation de codes d'étalement différents. Dans le cas des transmissions descendantes tous les terminaux mobiles, situés dans une même cellule, partagent la puissance de sortie de la station de base (BTS ou Node B du RAN) qui contrôle cette cellule.

Lorsque la puissance de sortie d'une cellule atteint son maximum, le réseau ne peut plus théoriquement établir de nouveau service au niveau de cette cellule. Il existe cependant un mécanisme dit « de préemption » qui permet à un RNC de préempter des ressources qu'il a précédemment attribuées à un service associé à un niveau de priorité faible, pour les réattribuer à un service à établir, associé à un niveau de priorité plus élevé.

Ce mécanisme de préemption est défini, pour une interface lu entre le réseau de coeur (CN) et un contrôleur de réseau radio (RNC), par la spécification 3GPP TS 25.413. Les données de préemption, associées à un service d'un type donné, sont habituellement transmises par le CN sous la forme de paramètres de service dits de priorité d'allocation/rétention (ou « Allocation/Retention priority ») intégrés dans la requête d'établissement du service (ou « RAB Assignement Request »).

Le mécanisme de préemption permet donc, en cas de saturation d'une cellule, de forcer l'établissement d'un service à niveau de priorité élevé, au détriment d'un service à niveau de priorité faible, lequel est alors supprimé. Une telle suppression peut être difficile à accepter par l'utilisateur dont le terminal mobile est soudainement déconnecté du réseau. En outre, l'établissement d'un service requérant un débit élevé peut nécessiter la préemption de ressources attribuées à plusieurs services de niveau de priorité faible, et donc la suppression de ces derniers.

L'invention a donc pour but d'améliorer la situation.

Elle propose à cet effet un procédé de préemption de ressources pour l'établissement de services, associés à des paramètres de service (dont un débit requis), entre des terminaux mobiles et un réseau d'accès radio d'un réseau de communications mobiles.

Ce procédé se caractérise par le fait qu'il comporte des étapes de, d'une part, associer à chaque service, en vue de son établissement, un débit maximum pour la préemption de ressources du réseau, et d'autre part, en cas de requête d'établissement d'un service, associé à un débit requis et un débit maximum de préemption, et d'une insuffisance de ressources disponibles pour assurer l'établissement selon le débit requis, préempter des ressources du réseau pour assurer l'établissement du service selon un débit inférieur ou égal au débit maximum de préemption qui lui est associé.

Le procédé selon l'invention peut comporter d'autres caractéristiques qui pourront être prises séparément ou en combinaison, et notamment :
- on peut associer à certains au moins des différents types de service un débit minimum qui correspond à la quantité de ressources que l'on ne peut pas leur préempter,
- on peut préempter des ressources du réseau afin d'assurer l'établissement d'un service selon le débit maximum de préemption associé,
- lorsque le débit minimum définit également le débit en deçà duquel l'établissement d'un service est interdit, alors en cas de demande d'établissement d'un service associé à un débit requis et à des débits minimum et maximum de préemption et d'une insuffisance de ressources disponibles pour assurer l'établissement selon le débit requis, on peut préempter des ressources du réseau afin d'assurer l'établissement du service selon un débit compris entre les débits minimum et maximum de préemption associés,
- on peut intégrer un paramètre de service additionnel qui définit le débit maximum de préemption associé à un service dans chaque requête d'établissement de service (ou RAB Assignement Request) à destination du réseau d'accès radio. Dans ce cas, on peut intégrer le paramètre de service additionnel dans une portion de la requête contenant l'élément d'information dédié à la priorité d'allocation/rétention (ou « Allocation/ Retention Priority »). Lorsque la portion d'élément d'information comprend classiquement un paramètre de niveau de priorité, un paramètre de capacité de préemption, un paramètre de vulnérabilité de préemption et un paramètre de mise en file d'attente, on peut par exemple intégrer le paramètre de service additionnel après le paramètre de mise en file d'attente,
- en variante ou en complément, on peut transmettre au réseau d'accès radio une table de configuration de service établissant une correspondance entre chaque type de service et les paramètres de service associés, ces derniers comprenant notamment un paramètre de service additionnel définissant le débit maximum de préemption associé au type de service, afin que le réseau d'accès radio puisse, à réception d'une requête d'établissement de service, établir ce service compte tenu des paramètres de service stockés dans la table de configuration en correspondance de son type. Dans ce cas, on peut par exemple transmettre la table de configuration au réseau d'accès radio dans des messages d'exploration et de maintenance (ou « O&M Messages » (pour « Operation & Maintenance Messages »)),
- lorsqu'une préemption de ressources est requise, on peut préempter l'intégralité des ressources qui ont été précédemment attribuées à au moins un autre service préemptable, et de préférence lorsque son débit ne peut pas être dégradé,
- en variante ou en complément, lorsqu'une préemption de ressources est requise, on peut préempter des portions de ressources qui ont été précédemment attribuées à d'autres services préemptables, et de préférence lorsque leurs débits respectifs peuvent être dégradés. Dans ce cas, on peut préempter des portions de ressources qui ont été attribuées à un autre service préemptable jusqu'à ce que l'on dispose de suffisamment de ressources pour établir le service objet de la préemption. Par ailleurs, on peut préempter des ressources qui ont été attribuées à un autre service préemptable tant qu'il en reste suffisamment pour qu'il puisse fonctionner selon son débit minimum associé,
- lorsqu'une préemption de ressources est requise, on peut préempter des ressources qui ont été précédemment attribuées à un autre service préemptable associé au niveau de priorité qui est le plus faible par rapport à celui du service à établir.

L'invention propose également un réseau de communications mobiles comprenant un réseau de coeur raccordé à un réseau d'accès radio et agencé de manière à mettre en oeuvre un procédé de préemption de ressources du type de celui présenté ci-avant.

L'invention est particulièrement bien adaptée, bien que de façon non exclusive, aux réseaux cellulaires de type UMTS et GSM/GPRS, ainsi qu'aux réseaux locaux sans fils (ou WLAN pour « Wireless Local Area Network »).

D'autres caractéristiques et avantages de l'invention apparaîtront à l'examen de la description détaillée ci-après, et du dessin annexé, sur lequel l'unique figure illustre de façon schématique une partie d'un réseau de communications, de type UMTS, permettant de mettre en oeuvre un procédé de préemption de ressources selon l'invention. Le dessin annexé pourra non seulement servir à compléter l'invention, mais aussi contribuer à sa définition, le cas échéant.

L'invention a pour objet de permettre une préemption perfectionnée de ressources au sein d'un réseau de communications mobiles, en vue de l'établissement d'un service.

On a représenté sur l'unique figure une partie d'un réseau de communications mobiles, de type cellulaire, et plus précisément de type UMTS. Bien entendu, l'invention s'applique à d'autres types de réseau de communications mobiles, et en particulier aux réseaux de type GSM/GPRS, ainsi qu'aux réseaux locaux sans fils (ou WLAN).

Comme cela est illustré, un réseau cellulaire de type UMTS peut, d'une façon très schématique mais néanmoins suffisante à la compréhension de l'invention, être résumé à un réseau d'accès radio ou UTRAN (pour « UMTS Terrestrial Radio Access Network »), couplé par une interface appelée lu à un coeur de réseau ou CN (pour Core Network ), lui-même éventuellement couplé à un ou plusieurs autres réseaux publics et/ou privés (la liaison à ces autres réseaux est matérialisée par la flèche F à double sens).

Le coeur de réseau CN comporte généralement un premier serveur de service, appelé 3G-SGSN (pour « 3G - Service GPRS Serving Node ») et responsable des transferts de paquets de données ascendants et descendants entre l'UTRAN et des terminaux (ou stations) mobiles MS, et un second serveur de service appelé 3G-GGSN (pour « 3G - Gateway GPRS Serving Node »), couplé au serveur 3G-SGSN et assurant le rôle d'interface logique entre le réseau UMTS et les autres réseaux publics et/ou privés.

Le coeur de réseau CN comporte généralement, également, un centre de commutation mobile 3G-MSC (ou « 3G-Mobile Switching Centre ») couplé à l'interface lu et à au moins un réseau filaire public, tel qu'un réseau PLMN (pour « Public Land Mobile Network »). Ce centre de commutation mobile MSC est chargé de réaliser toutes les opérations nécessaires à la gestion des communications en mode circuit avec des terminaux mobiles MS.

Par ailleurs, le réseau d'accès radio, ci-après appelé UTRAN, comporte généralement, d'une part, plusieurs noeuds ou contrôleurs de réseau radio, également appelés RNCs (pour Radio Network Controllers) et couplés au coeur de réseau CN, via l'interface lu, et d'autre part, plusieurs stations de base d'émission/réception, également appelées Node Bs et associées chacune à une ou plusieurs cellules C couvrant chacune une zone radio, et couplées seules ou par groupe d'au moins deux à l'un des RNCs, via une interface logique.

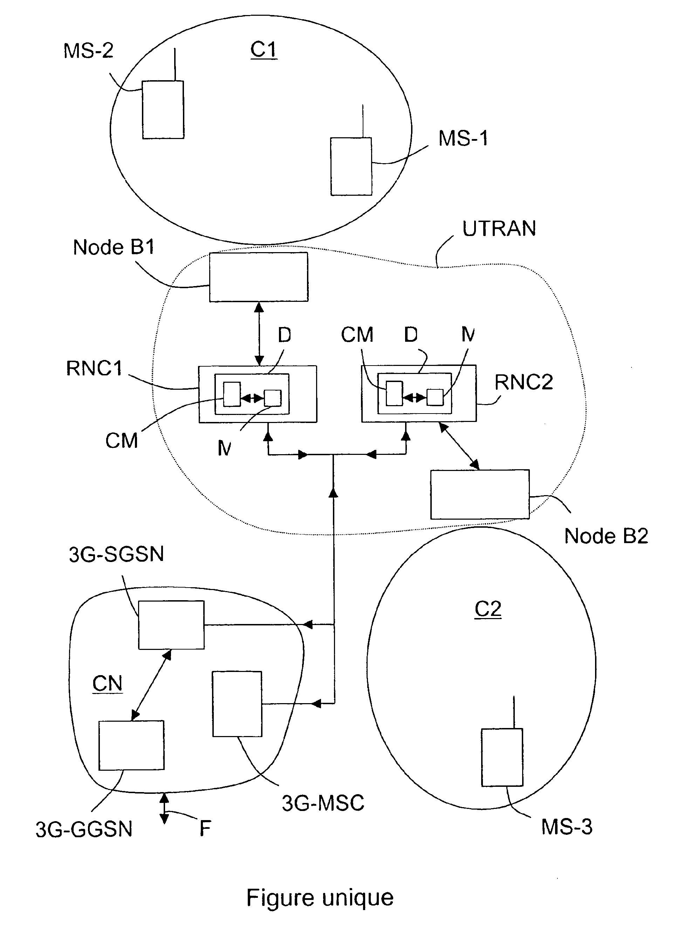

Dans l'exemple illustré sur la figure 1, l'UTRAN ne comporte que deux RNCi (i = 1 ou 2) couplés chacun à un seul Node Bj (ici, j = 1 ou 2). Bien entendu, il ne s'agit que d'un exemple schématique, non limitatif. Par ailleurs dans cet exemple illustré, chaque Node Bj contrôle une unique cellule Cj définissant une zone géographique (assimilée ci-après à la cellule Cj correspondante). Bien entendu, les Node Bs pourraient contrôler plusieurs cellules, et une zone géographique pourrait être définie par plusieurs cellules ou portions de cellules.

On considère également que les terminaux (ou stations, ou encore équipements) mobiles MS-k (ici, k = 1 à 3) situés dans les cellules Cj sont des téléphones mobiles capables d'échanger des données avec d'autres équipements du réseau, et notamment avec les équipements de l'UTRAN et du réseau de coeur CN, selon un protocole de communication, comme par exemple le protocole WAP (pour « Wireless Application Protocol »). Mais, l'invention n'est pas limitée à ce type de terminal mobile. Elle concerne également les assistants numériques personnels (ou PDAs pour Personal Digital Assistants) et les ordinateurs portables équipés d'une interface radio de communication.

Comme indiqué dans la partie introductive, le réseau UMTS dispose d'un mécanisme de préemption permettant à ses RNCs de préempter des ressources qu'ils ont précédemment attribuées à des services, établis et associés à des niveaux de priorité faibles, pour les réattribuer à d'autres services, devant être établis et associés à des niveaux de priorité plus élevés.

Ce mécanisme de préemption est défini, pour l'interface lu, par la spécification 3GPP TS 25.413 accessible sur le site http://www.3gpp.org.

Selon cette spécification, à chaque type de service sont associés des paramètres (ou données) de préemption qui sont transmis à un RNC par le réseau de coeur CN, par exemple par son serveur 3G-SGSN, sous la forme d'une requête d'établissement de service (ou Radio Access Bearer Assignement Request, ou encore RANAP message), ci-après appelé requête RAB, lorsqu'un service doit être établi avec un terminal mobile MS-k qui se trouve situé dans une cellule Cj qu'il contrôle.

Plus précisément, une requête RAB comprend une partie appelée élément d'information (ou « Information Element ») dédiée à la priorité d'allocation/rétention (ou « Allocation/Retention Priority ») et comportant plusieurs paramètres tels que le niveau de priorité (ou « « Priority level »), la capacité de préemption (ou « Pre-emption Capacity »), la vulnérabilité de préemption (ou « Pre-emption Vulnerability ») et la mise en file d'attente (ou « Queuing »).

Généralement, le niveau de priorité peut prendre des valeurs comprises entre 0 et 15, la valeur 1 correspondant au niveau de priorité le plus élevé et la valeur 15 au niveau de priorité le plus faible. La capacité de préemption peut prendre soit une valeur interdisant au service associé de déclencher une préemption, soit une valeur autorisant le service associé à déclencher une préemption. La vulnérabilité de préemption peut prendre soit une valeur interdisant la préemption des ressources du service associé, soit une valeur autorisant la préemption des ressources du service associé. La mise en file d'attente peut prendre soit une valeur interdisant la mise en file d'attente de la requête RAB associée, soit une valeur autorisant la mise en file d'attente de la requête RAB associée en vue de son traitement dès que possible.

Lorsque l'UTRAN, et plus précisément l'un de ses RNCs, reçoit une requête RAB, contenant les paramètres de service définissant un service dont l'établissement est requis, ledit RNC effectue un contrôle d'admission radio (ou « Radio Admission Control ») afin de déterminer s'il lui reste suffisamment de ressources disponibles pour établir ce service, compte tenu de son type. Le type d'un service est généralement entièrement défini dans la requête RAB associée, où il constitue un complément de l'élément d'information. Bien entendu, le RNC n'effectue ce contrôle d'admission radio qu'à condition que la requête RAB comprenne un paramètre de capacité de préemption dont la valeur autorise le service associé à déclencher une préemption.

On entend ici par type de service des paramètres de service tels que la classe de trafic (ou « Traffic Class »), le débit de bits maximum (ou « Maximum bit rate »), le descripteur de statistiques source (ou « Source Statistics Descriptor »), et le domaine CN. La classe de trafic peut prendre généralement des valeurs représentant respectivement les trafics de type « conversational », « interactive », « background », et « streaming ». Le débit de bits maximum peut par exemple prendre des valeurs telles que 12,2 kbps (kilobits par seconde), 64 kbps, 128 kbps ou 384 kbps. Le descripteur de statistiques source peut prendre au moins la valeur « speech » et la valeur « unknown ». Le domaine CN peut prendre au moins la valeur CS (pour « Circuit Switch ») et la valeur PS (pour « Packet Switch »).

Les ressources nécessaires à l'établissement d'un service dépendent principalement de son débit de bits maximum.

Dans un réseau UMTS classique, lorsqu'un RNC dispose de suffisamment de ressources pour permettre l'établissement du service selon son débit maximum, il les attribue au service. Dans le cas contraire, le RNC détermine parmi les services établis ceux qui sont associés aux niveaux de priorité les plus faibles. Puis, il préempte les ressources précédemment attribuées à l'un au moins de ces services pour les attribuer au service objet de la requête RAB. En fait, le RNC préempte la quantité de ressources correspondant au débit maximum du service requis, ce qui à pour conséquence de supprimer un ou plusieurs services préalablement établis.

L'invention procède différemment afin d'éviter que les ressources attribuées à des services associés à des niveaux de priorité faibles soient préemptées de façon systématique au profit de services associés à des niveaux de priorité plus élevés.

Pour ce faire, l'invention propose d'associer à chaque service, en vue de son établissement, un débit (de bits) maximum pour la préemption de ressources du réseau. Ainsi, lorsqu'un RNC de l'UTRAN reçoit une requête d'établissement d'un service (associé à un débit (de bits) requis et un débit maximum de préemption) mais que les ressources disponibles sont insuffisantes pour permettre l'établissement de ce service selon le débit requis, il préempte des ressources du réseau, précédemment attribuées à au moins un autre service, pour assurer l'établissement du service selon un débit inférieur ou égal au débit maximum de préemption qui lui est associé.

De la sorte, il est possible de réduire notablement l'influence des préemptions, et notamment le nombre de suppression de connexions (ou services) qu'elles occasionnent.

Cette influence peut être encore réduite si l'on associe à certains au moins des différents types de service un débit minimum correspondant à la quantité de ressources que l'on ne peut pas leur préempter. En effet, dans ce mode de réalisation les services, qui peuvent fonctionner en mode dégradé (c'est-à-dire avec un débit réduit), ne peuvent plus être supprimés puisqu'ils sont assurés de disposer en permanence de ressources correspondant à leur débit minimum.

Le débit d'établissement du service objet de la préemption est préférentiellement égal au débit maximum de préemption qui lui est associé.

Mais, dans une variante de réalisation, on peut se servir du débit minimum pour définir un débit en deçà duquel l'établissement d'un service est interdit. Dans ce cas, lorsqu'un RNC de l'UTRAN reçoit une requête d'établissement d'un service (associé à un débit (de bits) requis, un débit maximum de préemption et un débit minimum de préemption) mais que les ressources disponibles sont insuffisantes pour permettre l'établissement de ce service selon le débit requis, on préempte des ressources du réseau, précédemment attribuées à au moins un autre service, pour assurer l'établissement du service selon un débit compris entre les débits minimum et maximum de préemption associés. Cela confère une certaine souplesse au réseau et réduit encore l'influence des préemptions.

L'association d'un débit maximum de préemption (comme celui d'un débit minimum de préemption) peut s'effectuer d'au moins deux façons.

Une première façon consiste à ne pas modifier le standard 3GPP précité, et notamment l'interface lu entre le réseau de coeur CN et les RNCs. On prévoit alors une table de configuration de service qui établit une correspondance entre chaque type de service et les paramètres de service associés, y compris un paramètre de service additionnel qui définit le débit maximum de préemption associé au type de service (ainsi qu'éventuellement un autre paramètre de service additionnel qui définit le débit minimum associé au type de service). Une telle table va donc comprendre les paramètres suivants, pour chaque type de service répertorié : classe de trafic, débit de bits maximum, descripteur de statistiques source (SSD), domaine CN, niveau de priorité d'allocation/rétention, capacité de préemption (d'allocation/rétention), vulnérabilité de préemption (d'allocation/rétention), mise en file d'attente, et débit de préemption maximum.

Un exemple de table de configuration est donné ci-dessous.

| Classe de trafic | Débit Max (kbps) | SSD | Domaine CN | Capacité de Préemption | Vulnérabilité de Préemption | Niveau de Priorité | File | Débit Max de préemption (kbps) |
|---|---|---|---|---|---|---|---|---|
| Conver | 12,2 | Spe | CS | Mtp | P | 1 | NA | 12,2 |
| Conver | 12,2 | Spe | CS | Mtp | P | 15 | NA | 4,95 |
| Interac | 384 | Unk | PS | Mtp | P | 1 | NA | 384 |
| Interac | 384 | Unk | PS | Mtp | P | 7 | A | 128 |
| Interac | 384 | Unk | PS | Mtp | P | 15 | A | 64 |
| Backg | 384 | Unk | PS | Mtp | P | 1 | A | 128 |
| Backg | 384 | Unk | PS | Mtp | P | 7 | A | 64 |
| Backg | 384 | Unk | PS | Mtp | P | 15 | A | 32 |

Dans ce tableau, « Conver » signifie « Conversational », « Interac » signifie « Interactive », « Backg » signifie « Background », « SSD » signifie « Source Statistics Descriptor », « Spe » signifie « Speech », « Unk » signifie « Unknown », « Mtp » signifie « May trigger pre-emption », « P » signifie « Pre-emptable », « NA » signifie « Not allowed », et « A » signifie « Allowed ».

Ce type de tableau est par exemple généré par le réseau de coeur CN, et plus précisément par son serveur 3G-SGSN (pour le mode paquet) ou son centre de commutation mobile 3G-MSC (pour le mode circuit), et transmis aux RNCs concernés de l'UTRAN par le biais de messages, préférentiellement de type exploration et de maintenance (ou O&M Messages (pour « Operation & Maintenance Messages »)). Chaque RNC dispose ainsi, par exemple dans une mémoire M, d'une table de configuration qui lui permet de se configurer chaque fois qu'il reçoit une requête RAB d'établissement de service, ou en d'autres termes d'attribuer des ressources qui correspondent soit au débit maximum de préemption associé au service requis, soit à l'intervalle compris entre les débits minimum et maximum de préemption associés au service requis. Il lui suffit en effet de reconnaître le type de service requis, puis d'accéder à la mémoire M pour déterminer le débit maximum de préemption associé (ou l'intervalle compris entre les débits minimum et maximum de préemption associés).

La gestion de la configuration au sein d'un RNC peut être assurée, par exemple, par un module de configuration MC appartenant, comme illustré, à un dispositif de configuration D comportant éventuellement la mémoire M. Un tel dispositif de configuration D, et notamment son module de configuration MC ainsi qu'éventuellement sa mémoire M, peuvent être réalisés sous la forme de circuits électroniques, de modules logiciels (ou informatiques), ou d'une combinaison de circuits et de logiciels.

Une seconde façon consiste à modifier légèrement le standard 3GPP précité, et notamment l'interface lu entre le réseau de coeur CN et les RNCs. Plus précisément, on utilise un paramètre de service additionnel qui définit le débit maximum de préemption précité, que l'on souhaite associer à un service d'un type donné. Bien entendu, comme indiqué précédemment, on peut également utiliser un autre paramètre de service additionnel pour définir le débit minimum de préemption précité, que l'on souhaite associer à un service d'un type donné.

Ce (ou ces) paramètre(s) de service additionnel(s) est (sont) préférentiellement intégré(s) par le réseau de coeur CN, et plus précisément par son serveur 3G-SGSN (ou le 3G-MSC en mode circuit) dans la requête RAB qu'il transmet à un RNC de l'UTRAN lorsqu'il souhaite qu'il établisse un service. Dans ce cas, chaque paramètre de service additionnel est préférentiellement intégré dans la portion de la requête RAB qui contient l'élément d'information dédié à la priorité d'allocation/rétention. Cette intégration peut par exemple se faire après le dernier paramètre classique de l'élément d'information, c'est-à-dire le paramètre de mise en file d'attente.

Ainsi, lorsqu'un RNC de l'UTRAN reçoit une requête RAB d'établissement d'un service, il en extrait les données de service et notamment le débit maximum de préemption (ainsi qu'éventuellement le débit minimum de préemption) afin de se configurer en conséquence, comme indiqué précédemment. La gestion de la configuration peut être assurée, comme indiqué précédemment, par un dispositif de configuration D implanté dans le RNC (lequel, dans ce cas, n'a pas besoin de comprendre de mémoire M).

Comme indiqué précédemment, ce mode de réalisation nécessite une adaptation protocolaire de l'interface lu pour qu'elle puisse supporter des requêtes RAB comprenant un ou deux paramètres de service additionnels.

A titre d'exemple illustratif, d'une première part, un service associé à une classe de trafic conversational, un débit maximum requis de 12,2 kbps et un niveau de priorité égal à 1, peut être associé à un débit maximum de préemption de 12,2 kbps (inchangé), d'une deuxième part, un service associé à une classe de trafic interactive, un débit maximum requis de 384 kbps et un niveau de priorité égal à 15, peut être associé à un débit maximum de préemption de 64 kbps, et d'une troisième part, un service associé à une classe de trafic background, un débit maximum requis de 384 kbps et un niveau de priorité égal à 7, peut être associé à un débit maximum de préemption de 64 kbps.

Selon l'invention, au moins trois modes de préemption peuvent être envisagés.

Un premier mode consiste à préempter l'intégralité des ressources qui ont été précédemment attribuées à au moins un autre service préemptable. Dans ce cas, afin de tenir compte des services qui sont préemptables et qui supportent un fonctionnement selon un débit dégradé, comme par exemple ceux dont la classe de trafic est de type interactive ou background et le domaine CN de type PS (mode paquet), on ne préempte préférentiellement que les ressources qui sont attribuées à des services qui ne supportent pas un fonctionnement selon un débit dégradé, comme par exemple ceux dont la classe de trafic est de type conversational et le domaine CN de type CS (tels que les services vidéo sur l'interface lu-CS (CS64) avec le centre de commutation mobile 3G-MSC (mode circuit)).

Ainsi, seules les communications impliquant des services, dont le débit ne peut pas être dégradé, peuvent voir leurs ressources préemptées et donc leurs connexions (ou liaisons) supprimées.

Un deuxième mode consiste à ne préempter que des portions de ressources qui ont été précédemment attribuées à des services préemptables. Dans ce cas, afin de tenir compte des services qui sont préemptables mais qui ne supportent pas un fonctionnement selon un débit dégradé, on ne préempte préférentiellement que des portions des ressources qui sont attribuées à des services qui supportent un fonctionnement selon un débit dégradé.

Dans ce cas, l'opération de préemption peut se dérouler en plusieurs étapes pendant lesquelles le RNC concerné préempte successivement des portions de ressources qui ont été attribuées à d'autres services préemptables jusqu'à ce qu'il dispose de suffisamment de ressources pour établir le service objet de la préemption. Il est également possible de préempter successivement des portions de ressources attribuées à un service préemptable pour établir plusieurs services requis, tant qu'il en reste suffisamment pour qu'il puisse fonctionner selon son débit minimum associé.

Dans ce deuxième mode, seules les communications impliquant des services, dont le débit peut être dégradé, peuvent voir leurs ressources préemptées dans la limite de leurs débits minimum associés. Cette préemption présente l'avantage de ne jamais interrompre une communication. Seule la qualité de service (ou QoS) peut être ressentie comme légèrement dégradée par l'utilisateur final.

Un troisième mode consiste à combiner les premier et deuxième modes présentés ci-avant. Plus précisément, en cas de besoin important de ressources, on préempte à la fois toutes les ressources attribuées à un service dont le débit ne peut pas être dégradé et en complément une portion des ressources attribuées à un ou plusieurs services dont le débit peut être dégradé.

Les différents modes de réalisation (ou de fonctionnement), qui ont été décrits ci-avant, peuvent également permettre la prise en compte des niveaux de priorité des services établis et requis. Plus précisément, il est préférable de ne préempter que des ressources qui ont été attribuées à des services dont les niveaux de priorité sont plus faibles que celui du service requis. Il est encore plus préférable de ne préempter que des ressources qui ont été attribuées à des services dont les niveaux de priorité sont les plus faibles par rapport à celui du service requis.

Grâce à l'invention, il est possible de limiter l'influence de la préemption de ressources au profit de services associés, notamment, à des hauts niveaux de priorité et des hauts débits, en particulier sur les services associés à des niveaux de priorité faibles. Cela permet de faciliter l'introduction du mécanisme de préemption dans les réseaux mobiles. En outre, cela permet aux opérateurs de contrôler plus facilement les caractéristiques des mécanismes de préemption de leurs réseaux mobiles.

L'invention ne se limite pas aux modes de réalisation de réseau de communications mobiles, de dispositif de configuration et de procédé de préemption de ressources décrits ci-avant, seulement à titre d'exemple, mais elle englobe toutes les variantes que pourra envisager l'homme de l'art dans le cadre des revendications ci-après.

Ainsi, dans ce qui précède on a décrit une mise en oeuvre de l'invention en mode paquet, mais l'invention s'applique également au mode circuit.

## Revendications

1. Procédé de préemption de ressources pour l'établissement d'un service, associé à des paramètres de service dont un débit requis, entre un terminal mobile (MS) et un réseau d'accès radio (UTRAN) d'un réseau de communications mobiles, **caractérisé en ce qu'**il comporte des étapes de : i) associer à chaque service un débit maximum pour la préemption de ressources du réseau, en vue de son établissement, et ii) en cas de requête d'établissement d'un service associé à un débit requis et un débit maximum de préemption et d'une insuffisance de ressources disponibles pour assurer ledit établissement selon ledit débit requis, préempter des ressources du réseau pour assurer ledit établissement de service selon un débit inférieur ou égal audit débit maximum de préemption associé.

2. Procédé selon la revendication 1, **caractérisé en ce que** l'on associe à certains au moins desdits services un débit minimum correspondant à une quantité de ressources qui ne peuvent pas être préemptées.

3. Procédé selon l'une des revendications 1 et 2, **caractérisé en ce que** l'on préempte des ressources du réseau de manière à assurer l'établissement d'un service selon le débit maximum de préemption associé.

4. Procédé selon l'une des revendications 1 et 2, **caractérisé en ce que** le débit minimum définit également un débit en deçà duquel l'établissement d'un service est interdit, et **en ce qu'**en cas de demande d'établissement d'un service associé à un débit requis et à des débits minimum et maximum de préemption et d'une insuffisance de ressources disponibles pour assurer ledit établissement selon ledit débit requis, on préempte des ressources du réseau de manière à assurer l'établissement dudit service selon un débit compris entre lesdits débits minimum et maximum de préemption associés.

5. Procédé selon l'une des revendications 1 à 4, **caractérisé en ce que** l'on intègre un paramètre de service additionnel, définissant un débit maximum de préemption associé à un service, dans chaque requête d'établissement de service à destination dudit réseau d'accès radio (UTRAN).

6. Procédé selon la revendication 5, **caractérisé en ce que** l'on intègre ledit paramètre de service additionnel dans une portion de ladite requête appelée « élément d'information » et dédiée à la priorité d'allocation/rétention.

7. Procédé selon la revendication 6, **caractérisé en ce que,** ladite portion d'élément d'information comprenant un paramètre de niveau de priorité, un paramètre de capacité de préemption, un paramètre de vulnérabilité de préemption et un paramètre de mise en file d'attente, on intègre ledit paramètre de service additionnel après ledit paramètre de mise en file d'attente.

8. Procédé selon l'une des revendications 1 à 4, **caractérisé en ce que** l'on transmet audit réseau d'accès radio (UTRAN) une table de configuration de service établissant une correspondance entre chaque type de service et les paramètres de service associés, ces derniers comprenant un paramètre de service additionnel définissant un débit maximum de préemption associé audit type de service, de sorte que ledit réseau d'accès radio (UTRAN) puisse, à réception d'une requête d'établissement de service, procéder à l'établissement dudit service compte tenu des paramètres de service stockés dans ladite table de configuration en correspondance de son type.

9. Procédé selon la revendication 8, **caractérisé en ce que** l'on transmet ladite table de configuration audit réseau d'accès radio (UTRAN) dans des messages d'exploration et de maintenance.

10. Procédé selon l'une des revendications 1 à 9, **caractérisé en ce qu'**en cas de besoin de préemption de ressources, on préempte l'intégralité des ressources attribuées à au moins un autre service préemptable, déjà établi.

11. Procédé selon la revendication 10, **caractérisé en ce que** l'on préempte l'intégralité des ressources attribuées audit autre service préemptable lorsque son débit ne peut pas être dégradé.

12. Procédé selon l'une des revendications 1 à 11, **caractérisé en ce qu'**en cas de besoin de préemption de ressources, on préempte des portions de ressources attribuées à d'autres services préemptables, déjà établis.

13. Procédé selon la revendication 12, **caractérisé en ce que** l'on préempte lesdites portions de ressources attribuées auxdits autres services préemptables lorsque leurs débits respectifs peuvent être dégradés.

14. Procédé selon l'une des revendications 12 et 13, **caractérisé en ce que** l'on préempte des portions de ressources attribuées à un autre service préemptable jusqu'à ce que l'on dispose de suffisamment de ressources pour établir le service objet de la préemption.

15. Procédé selon la combinaison des revendications 2 et 14, **caractérisé en ce** l'on préempte des ressources attribuées à un autre service préemptable tant qu'il en reste suffisamment pour qu'il puisse fonctionner selon son débit minimum associé.

16. Procédé selon l'une des revendications 1 à 15, **caractérisé en ce qu'**en cas de besoin de préemption de ressources, on préempte des ressources attribuées à un autre service préemptable associé au niveau de priorité qui est le plus petit par rapport au niveau de priorité du service à établir.

17. Réseau de communications mobiles comprenant un réseau de coeur (CN) raccordé à un réseau d'accès radio (UTRAN), **caractérisé en ce qu'**il est agencé pour mettre en oeuvre le procédé de préemption de ressources selon l'une des revendications précédentes.

## Claims

1. A resource preemption method for establishing a service, associated with service parameters including a required bit rate, between a mobile terminal (MS) and a radio access network (UTRAN) of a mobile communication network, **characterized in that** it comprises steps of: i) associating each service with a maximum bit rate for preempting network resources, with a view towards establishing said service, and ii) in the event of a request to establish a service associated with a required bit rate and a maximum preemption bit rate, and an insufficiency of resources available to ensure said establishment with the required bit rate, preempting network resources to ensure said establishment of service with a bit rate less than or equal to said associated maximum preemption bit rate.

2. A method according to claim 1, **characterized in that** at least some of said services are associated with a minimum bit rate corresponding to a quantity of resources which may not be preempted.

3. A method according to one of the claims 1 and 2, **characterized in that** network resources are preempted in such a way as to ensure the establishment of a service with the associated maximum preemption bit rate.

4. A method according to one of the claims 1 and 2, **characterized in that** the minimum bit rate also defines a bit rate below which it is prohibited to establish a service, and **in that** in the event of a request to establish a service associated with a required bit rate and with maximum and minimum preemption bit rates, and an insufficiency of resources available to ensure said establishment with the required bit rate, network resources are preempted in such a way as to ensure the establishment of said service with a bit rate between said associated maximum and minimum preemption bit rates.

5. A method according to one of the claims 1 to 4, **characterized in that** an additional service parameter is incorporated, said parameter defining a maximum preemption bit rate associated with a service, within each service establishment request intended for said radio access network (UTRAN).

6. A method according to claim 5, **characterized in that** said additional service parameter is incorporated into s portion of said request known as the "information element" portion and devoted to allocation/retention priority.

7. A method according to claim 6, **characterized in that,** said element information portion comprising a priority level parameter, a preemption capacity parameter, a preemption vulnerability parameter, and a queuing parameter, said additional service parameter is incorporated after said queuing parameter.

8. A method according to one of the claims 1 to 4, **characterized in that** a service configuration table establishing a match between each type of service and the associated service parameters is transmitted to said radio access network (UTRAN), said associated service parameters comprising an additional service parameter defining a maximum preemption bit rate associated with said type of service, in such a way that said radio access network (UTRAN) can, upon receiving a service establishment request, proceed to establish said service, taking into account the service parameters stored within said configuration table matching its type.

9. A method according to claim 8, **characterized in that** said configuration table is transmitted to said radio access network (UTRAN) within operation and maintenance messages.

10. A method according to one of the claims 1 to 9, **characterized in that** when it is necessary to preempt resources, all resources assigned to at least one other already-established preemptible service are preempted.

11. A method according to claim 10, **characterized in that** all resources assigned to said other preemptible service are preempted when its bit rate may not be downgraded.

12. A method according to one of the claims 1 to 11, **characterized in that** when it is necessary to preempt resources, portions of resources assigned to other already-established preemptible services are preempted.

13. A method according to claim 12, **characterized in that** portions of resources assigned to other already-established preemptible services are preempted when their respect bit rates may be downgraded.

14. A method according to one of the claims 12 and 13, **characterized in that** portions of resources assigned to another preemptible service are preempted until sufficient resources are available to establish the service on behalf of which the resources are being preempted.

15. A method according to the combination of the claims 2 and 14, **characterized in that** resources assigned to another preemptible service are preempted for as long as a sufficient quantity of said resources remain for said preemptible service to be able to function with its associated minimum bit rate.

16. A method according to one of the claims 1 to 15, **characterized in that** when it is necessary to preempt resources, resources assigned to another preemptible service associated with the lowest priority level when compared to the priority level of the service to be established are preempted.

17. A mobile communication network comprising a core network (CN) connected to a radio access network (UTRAN), **characterized in that** it is designed to implement the resource preemption method according to one of the preceding claims.

## Patentansprüche

1. Verfahren zur Bevorrechtigung von Betriebsmitteln zum Aufbau eines Dienstes, in Verbindung mit Dienstparametern, worunter ein geforderter Durchsatz, zwischen einem mobilen Endgerät (MS) und einem Funkzugangsnetz (UTRAN) eines mobilen Kommunikationsnetzwerks, **dadurch gekennzeichnet, dass** es die folgenden Schritte umfasst: i) Zuweisen, an jeden Dienst, eines maximalen Durchsatzes für die Bevorrechtigung von Betriebsmitteln des Netzes für dessen Aufbau, und ii), im Fall der Anfrage für den Aufbau eines Dienstes, welchem ein geforderter Durchsatz und ein maximaler Bevorrechtigungsdurchsatz zugeordnet ist, und bei unzureichenden verfügbaren Betriebsmitteln, um den besagten Aufbau entsprechend dem besagten geforderten Durchsatz zu gewährleisten, Bevorrechtigung von Betriebsmitteln des Netzwerks zum Gewährleisten des besagten Dienstaufbaus gemäß einem Durchsatz, der niedriger als oder gleich dem besagten zugeordneten maximalen Bevorrechtigungsdurchsatz ist.

2. Verfahren nach Anspruch 1, **dadurch gekennzeichnet, dass** man mindestens einigen der besagten Dienste einen minimalen Durchsatz zuordnet, welcher einer Anzahl von Betriebsmitteln entspricht, die nicht bevorrechtigt werden können.

3. Verfahren nach einem der Ansprüche 1 und 2, **dadurch gekennzeichnet, dass** man Netzbetriebsmittel bevorrechtigt, um den Aufbau eines Dienstes entsprechend dem zugeordneten maximalen Bevorrechtigungsdurchsatz zu gewährleisten.

4. Verfahren nach einem der Ansprüche 1 und 2, **dadurch gekennzeichnet, dass** der minimale Durchsatz ebenfalls einen Durchsatz definiert, unter welchem der Aufbau eines Dienstes untersagt ist, und dadurch, dass man, im Fall einer Anfrage für den Aufbau eines Dienstes, welchem ein geforderter Durchsatz sowie ein minimaler und ein maximaler Bevorrechtigungsdurchsatz zugeordnet ist, und bei unzureichenden verfügbaren Betriebsmitteln, um den besagten Aufbau entsprechend dem besagten geforderten Durchsatz zu gewährleisten, Netzbetriebsmittel bevorrechtigt, um den Aufbau des besagten Dienstes gemäß einem Durchsatz, der zwischen dem zugeordneten minimalen Bevorrechtigungsdurchsatz und dem zugeordneten maximalen Bevorrechtigungsdurchsatz liegt.

5. Verfahren nach einem der Ansprüche 1 bis 4, **dadurch gekennzeichnet, dass** man einen zusätzlichen Dienstparameter, welcher einen einem Dienst zugeordneten maximalen Bevorrechtigungsdurchsatz definiert, in jede an das besagte Funkzugangsnetz (UTRAN) adressierte Anfrage für den Aufbau eines Dienstes integriert.

6. Verfahren nach Anspruch 5, **dadurch gekennzeichnet, dass** man den besagten zusätzlichen Dienstparameter in eine Portion der besagten Anfrage, dem sogenannten "Informationselement", welches der Zuweisungs-/Zurückbehaltungs-Priorität zugeordnet ist, integriert.

7. Verfahren nach Anspruch 6, **dadurch gekennzeichnet, dass** die Informationselement-Portion einen Prioritätsniveau-Parameter, einen Bevorrechtigungskapaatäts-Parameter, einen Bevorrechtigungsempfindlichkeits-Parameter und einen Warteschleifen-Parameter enthält, und dass man den besagten zusätzlichen Dienstparameter hinter dem besagten Warteschleifen-Parameter einfügt.

8. Verfahren nach einem der Ansprüche 1 bis 4, **dadurch gekennzeichnet, dass** man an das besagte Funkzugangsnetz (UTRAN) eine Dienstkonfigurationstabelle sendet, welche eine Korrespondenz zwischen jedem Diensttyp und den zugeordneten Dienstparametern erstellt, wobei letztere einen zusätzlichen Dienstparameter umfassen, welcher einen dem besagten Diensttyp zugeordneten maximalen Bevorrechtigungsdurchsatz definiert, so dass das besagte Funkzugangsnetz (UTRAN) bei Empfang einer Dienstaufbauanfrage den besagten Dienst unter Berücksichtigung der in der besagten Konfigurationstabelle gespeicherten Parameter, welche dem Diensttyp entsprechen, aufbauen kann.

9. Verfahren nach Anspruch 8, **dadurch gekennzeichnet, dass** man die besagte Konfigurationstabelle an das besagte Funkzugangsnetz (UTRAN) in Explorations- und Wartungsnachrichten übermittelt.

10. Verfahren nach einem der Ansprüche 1 bis 9, **dadurch gekennzeichnet, dass** man bei Bedarf einer Bevorrechtigung von Betriebsmitteln die Betriebsmittel, die mindestens einem anderen bevorrechtigungsfähigen, schon aufgebauten Dienst zugewiesen sind, bevorrechtigt.

11. Verfahren nach Anspruch 10, **dadurch gekennzeichnet, dass** man alle Betriebsmittel, die dem besagten anderen bevorrechtigungsfähigen Dienst zugewiesen sind, bevorrechtigt, wenn dessen Durchsatz dadurch nicht vermindert werden kann.

12. Verfahren nach einem der Ansprüche 1 bis 11, **dadurch gekennzeichnet, dass** man bei Bedarf einer Bevorrechtigung von Betriebsmitteln Portionen der den anderen, schon aufgebauten bevorrechtigungsfähigen Diensten zugewiesenen Betriebsmittel bevorrechtigt.

13. Verfahren nach Anspruch 12, **dadurch gekennzeichnet, dass** man die besagten Portionen der den besagten anderen bevorrechtigungsfähigen Diensten zugewiesenen Betriebsmittel bevorrechtigt, wenn deren jeweiligen Durchsätze dadurch nicht vermindert werden können.

14. Verfahren nach einem der Ansprüche 12 und 13, **dadurch gekennzeichnet, dass** man Portionen der einem anderen bevorrechtigungsfähigen Dienst zugewiesenen Betriebsmittel bevorrechtigt, bis man über ausreichende Betriebsmittel zum Aufbau des bevorrechtigten Dienstes verfügt.

15. Verfahren nach einer Kombination der Ansprüche 2 und 14, **dadurch gekennzeichnet, dass** man die einem anderen bevorrechtigungsfähigen Dienst zugewiesenen Betriebsmittel bevorrechtigt, solange diesem noch ausreichende Betriebsmittel zur Verfügung bleiben, um entsprechend seinem zugeordneten minimalen Durchsatz arbeiten zu können.

16. Verfahren nach einem der Ansprüche 1 bis 15, **dadurch gekennzeichnet, dass** man bei Bedarf einer Bevorrechtigung von Betriebsmitteln Betriebsmittel, welche einem anderen bevorrechtigungsfähigen Dienst, dessen Prioritäts niveau niedriger ist als das Prioritätsniveau des aufzubauenden Dienstes, zugeordnet sind, bevorrechtigt.

17. Mobiles Kommunikationsnetzwerk, welches ein an ein Funkzugangsnetz (UTRAN) angeschlossenes Kernnetz (CN) umfasst, **dadurch gekennzeichnet, dass** es fähig ist, das Verfahren zur Bevorrechtigung von Betriebsmitteln nach einem der vorstehenden Ansprüche auszuführen.
